# EUROPEAN PATENT APPLICATION

(11) **EP 4 818 921 A1**
(43) Date of publication of application: **07.10.2026**
(21) Application number: 26152564.6
(22) Date of filing: 19.01.2026
(51) Int. Cl.: G06F 16/242, G06Q 10/0635

(54) **SYSTEMS AND METHODS FOR GENERATING ASSURANCE CASES**

(30) Priority: 02.04.2025 US 202519098474
(71) Applicant: General Electric Company, Cincinnati, Ohio 45215 (US)
(72) Inventor: PAUL, Saswata, Niskayuna, 12309-1027 (US); MENG, Baoluo, Niskayuna, 12309-1027 (US); DURLING, Michael, Niskayuna, 12309-1027 (US); SIU, Kit, Niskayuna, 12309-1027 (US)
(74) Representative: Openshaw & Co.

(57) **Abstract**

A system (1), method (400), and program for generating self-consistent assurance cases (60) using one or more computer models (20) configured to receive a query (24) from a user, to process the query (24) and determine the nature of the assurance case to be generated, to determine and retrieve from a normalized, curated database (10) the evidence to support the assurance case claims, and to populate an assurance case candidate (62) with the same. The assurance case candidate (62) may then be evaluated by a critic (40) against one or more constraints (32) and then either returned to the computer model (20) for re-synthesis or forwarded to a translator (50) to be converted into a human-readable format.

## Description

This invention was made with Government support under Contract No. FA8750-20-C-0203 awarded by Defense Advanced Research Projects Agency (DARPA). The Government has certain rights in the invention.

### TECHNICAL FIELD

Aspects described herein generally relate to assurance cases and computational models capable of generating the same.

### BACKGROUND

In certain industries such as aerospace, healthcare, automotive, and cybersecurity, proving that a system (e.g., various aircraft-based or aircraft-related systems) satisfies a given confidence level for security or reliability is important both from a development standpoint and from a regulatory compliance standpoint. As technology advances and systems become increasingly more complex, the need for a structured and transparent approach to demonstrating security or reliability by using assurance cases has increased.

### BRIEF DESCRIPTION OF THE DRAWINGS

The aspects set forth in the drawings are illustrative and exemplary in nature and not intended to limit the subject matter defined by the claims. The following detailed description of the illustrative aspects can be understood when read in conjunction with the following drawings, where like structure is indicated with like reference numerals and in which:
FIG. 1 shows an exemplary system for generating assurance cases according to the disclosures herein;
FIG. 2 shows an exemplary system for generating assurance cases according to the disclosures herein;
FIG. 3 shows an exemplary query used to generate assurance cases according to the disclosures herein;
FIG. 4 shows an exemplary method for generating assurance cases according to the disclosures herein;
FIG. 5 shows an exemplary system for generating assurance cases according to the disclosures herein;
FIG. 6 shows an exemplary assurance case presented schematically in a Goal Structuring Notation (GSN) format; and
FIG. 7 shows an exemplary method for generating assurance cases according to the disclosures herein.

These and additional features provided by the aspects described herein will be more fully understood in view of the following detailed description, in conjunction with the drawings.

### DETAILED DESCRIPTION

Aspects of the disclosure described and illustrated herein provide for systems and methods for generating self-consistent assurance cases which comply with a standard, regulation, and/or style guide by leveraging Artificial Intelligence (AI) systems, Large Language Models (LLMs), and/or other computational models. These models may be configured to: process and respond to user inputs; retrieve from a database evidence which supports or refutes an argument and/or claim of an assurance case that is consistent with the user inputs; place the evidence in a proper, structured form consistent with the user's inputs; and check the generated assurance case for correctness, completeness, and/or compliance with appropriate metrics.

An assurance case is a carefully constructed framework that demonstrates whether a system meets security and/or reliability standards. At its core, an assurance case presents a claim about a system's dependability which is then supported or refuted by linking arguments and evidence in a connected, logical chain. Rather than relying on simple assertions, an assurance case systematically organizes data, analyses, and justifications to show that the system can be trusted to perform appropriately under its intended conditions.

The importance of assurance cases extends beyond regulatory compliance. While many governing bodies, such as the Federal Aviation Administration, the U.S. Food and Drug Administration, and the International Electrotechnical Commission utilize assurance cases as part of their certification processes, the value of an assurance case goes much further. Assurance cases provide a structured means of demonstrating why a system is compliant and/or reliable, making it easier for engineers, regulators, and stakeholders to assess its trustworthiness. By improving transparency, assurance cases help ensure that all considerations have been accounted for and that potential risks are identified and addressed.

Additionally, assurance cases play a role in risk assessment and lifecycle management. Because assurance cases include a detailed examination of a system's potential hazards and failure modes, they help organizations proactively identify weaknesses before those weaknesses become issues. Rather than being static documents, assurance cases evolve alongside a system, ensuring that as software updates, hardware changes, or operational conditions shift, various considerations remain thoroughly documented and reassessed. This adaptability makes the assurance cases an invaluable tool in industries where systems continue to meet rigorous standards even as they undergo modifications.

Beyond their technical and regulatory functions, assurance cases also enhance trust and confidence in a system. When an entity can present a well-structured, evidence-backed argument for why its product meets various standards, it fosters confidence among users, regulators, and investors alike.

As artificial intelligence, autonomous vehicles, and cyber-physical systems become increasingly integrated into everyday life, assurance cases continue to be a cornerstone of responsible system development. By providing a rigorous framework for demonstrating compliance, ensuring transparency, and managing risk, the assurance cases serve as a mechanism for ensuring that complex systems can be trusted to operate appropriately and effectively.

However, the creation of assurance cases can be complicated ordeals due in large part to the nature of modern systems, the difficulty of gathering evidence (or even identifying what evidence to use), and the use of rigorous logical reasoning to support claims. Many systems involve intricate software, hardware, and human interactions - all of which are considered when assessing reliability, security, and compliance. As these systems become more interconnected, the number of potential failure modes increases exponentially. Capturing and justifying the interactions in a structured manner that complies with varying rules cannot be appreciably completed manually (e.g., without complex computer systems utilizing specific algorithms as described herein).

Another significant challenge is providing high-quality evidence to support an assurance case. Evidence can come in many forms, including test results, formal verifications, hazard analyses, operational data, and expert judgement. However, obtaining comprehensive and reliable evidence can be difficult, particularly when dealing with emergent behaviors in complex systems. This is because some risks may become apparent after extensive real-world operation, making it hard to fully demonstrate compliance in advance. Furthermore, assurance cases account for uncertainties, such as unpredictable human interactions, environmental factors, or software bugs that may manifest under specific conditions. Ensuring that the available evidence is both complete and relevant to the claims being made includes significant effort and expertise.

Additionally, even when evidence is available, structuring a convincing argument remains a challenge. An assurance case links the evidence to the claims in a logical and coherent manner. This often involves the use of structured methodologies, such as GSN or Claims-Arguments-Evidence (CAE) models, to ensure that all reasoning is explicitly stated and that no logical gaps exist. However, crafting these arguments is not straightforward, as different stakeholders - regulators, engineers, and independent assessors - may have differing interpretations of what constitutes a strong or convincing argument. Additionally, the reasoning is robust enough to withstand scrutiny over time, even as new risks emerge or technologies evolve.

Yet another layer of difficulty stems from the dynamic nature of modern systems. Assurance cases are not one-time documents, but are maintained throughout a system's lifecycle. As software updates, hardware changes, or new regulatory rules emerge, the assurance case is revisited and updated accordingly. This results in continuous monitoring and validation, making assurance case management an ongoing and resource-intensive effort. In industries where rapid innovation occurs, ensuring that assurance cases keep pace with development without becoming a bottleneck is a persistent challenge.

Finally, regulatory and organizational constraints can further complicate the process. Different industries and governing bodies have varying rules for assurance cases, and demonstrating compliance with multiple - sometimes even changing - standards can be both time-consuming and costly. In some cases, assurance cases are developed in collaboration with external auditors or certification bodies, adding further complexity to the process. Organizations must balance thorough assurance with the practical limitations of cost, time, and available expertise.

As a result, it may be readily appreciated that generating, proving, and maintaining just one assurance case can be an arduous or even impossible task when performed by an individual or group of individuals working together. Nowadays, there is too much information and too many considerations at play for a person or group of persons to manage the generation of assurance cases unassisted.

For example, the blades of a gas turbine engine are considered by the Federal Aviation Administration (FAA) to be "life limited parts," which must have a defined life cycle that is established by the manufacturer. In order to certify an engine, the manufacturer must not only define this life cycle, but must also prove that a given blade meets this life cycle definition.

In order to prove that a given blade meets its life cycle requirements, all manner of properties must, in turn, be proven. Such properties may include, for example: whether the blade is suited to the prevailing operating conditions of the engine; whether the blade is suited to the type and frequency of cycling it will undergo when installed in a certain aircraft; whether the blade sufficiently resistant to creep, fatigue, and other mechanical stresses it will experience in the engine; whether the vibrational modes of the blade are sufficiently removed from certain excitation frequencies; whether the blade is sufficiently resistant to the thermal effects it will experience in the engine; whether the blade is sufficiently resistant to the chemical effects (e.g., oxidation, corrosion) it will experience in the engine; whether the blade can withstand foreign object damage; whether the blade is sufficiently cooled at various points during a life cycle; whether the blade is coated and, if so, whether the coating, likewise, survive these conditions; whether these conditions are satisfied throughout the range of set manufacturing tolerances; and/or what values are considered "sufficient" for any of these parameters.

Often times, full-scale testing of a given blade in its intended operating environment only occurs later on in its development life cycle - if at all. Before that, testing tools such as computer simulations, scale models, empirical analyses, test stands, retrofits, and the like serve as stand-ins. Each of these tools, in turn, has their own pros, cons, limitations, drawbacks, and assumptions - all of which must all be taken into account when ascertaining whether certain criteria are satisfied. These tools - including their caveats - also change over time, further complicating the task of tracking what data can be used for what and under what conditions. Additionally, due to real-world constraints, there may only be limited testing data available for a given blade, or different sets of testing data available across multiple blades.

To further complicate matters, the criteria that must be satisfied often changes. The FAA regulations are regularly updated - sometimes multiple times within the development cycle of a single engine. Additionally, a manufacturer that wishes to sell their engine internationally may not only need to comply with the regulations of the United States, but other countries as well. Different countries typically have different requirements, and the specific differences of these requirements may call for further analyses or proofs or change the nature of existing ones.

As a result, when a designer begins to put together an assurance case for this exemplary turbine blade (let alone an entire engine, which may have 24 sets of blades or more), not only is it uncertain whether a given blade satisfies the goal criteria, but it is also uncertain how these criteria are to be proven and what evidence exists to prove them. Certain evidentiary data, or a lack thereof, may foreclose certain logical chains or require others. This designer may also lack certain expertise to know whether a piece of evidence can be leveraged to support/refute a certain argument/claim, and the like.

Said another way, there is an excessive amount of data, and an excessive amount of claims/arguments with which to link to form proofs, for one person (or even a group of people) to sort through when building an assurance case. There is also no practical way to reliably or easily accommodate different stakeholders: building an assurance case for the FAA and building one for, e.g., the Japan Civil Aviation Bureau become their own, independent, and sizeable drafting efforts. There is similarly no practical way to reliably or easily update an existing assurance case in view of updated regulations or requirements. Further, even if a person or a group of people were able to prepare and update an assurance case, it would be impossible to complete when various regulations are constantly changing and/or new data is being received. That is, the time it would take for a person or group of people to prepare an assurance case greatly exceeds the various time periods in which new data and/parameters are received that are to be accounted for. As such, there exists a need for the complex systems described herein that can accurately take in the data and provide the results before new data and regulations are provided, and that can quickly adapt to provide new results shortly after new data and regulations are provided.

Additionally, because of these hurdles, the creation of an assurance case may often be a capstone endeavor. While the structured framework employed by assurance cases may also benefit designers earlier in the development of a part, component, or system - such as by helping to inform what tests must be conducted and/or what tests might be forgone, the effort and/or cost to generate or even prototype an assurance case for these use cases is prohibitive.

Those systems and methods disclosed herein solve these problems as well as enable the use of assurance cases in a greater variety of applications in a cost-effective manner. A user may quickly generate a new assurance case or update an existing assurance case in a way that is both faster and more accurate than existing methods. These assurance cases may be dynamically adjusted to accommodate a variety of stakeholders, regulatory bodies, and the like on a practical time scale - something that has, until now, been practically impossible. The dynamic building of logical chains also permits designers to accommodate newer methods and evidence without being bound to strict maintenance of established templates.

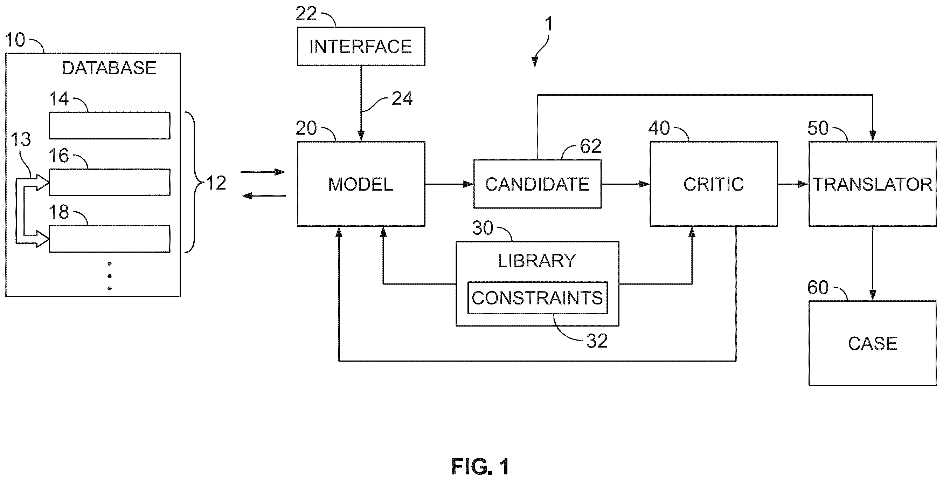

Turning now to FIG. 1, an exemplary system 1 for generating self-consistent assurance cases is shown. The system 1 includes a curated, normalized database 10, a computational model 20, a constraint library 30, a critic 40, and a translator 50 acting, further to any of the methods described herein, generate a human-readable assurance case 60.

The normalized database 10 contains, in part, data entries 12 and relationships 13 that are available to pick from in generating an assurance case 60. The normalized database 10 is a computer readable database such that the data entries 12 are stored in some form of computer memory and/or storage for recall by the computational model 20. The normalized database 10 may be stored on the same hardware which executes the computational model and/or may be stored on a remote, networked, and/or otherwise detachable/detached storage system, without limitation.

While it is possible to execute the systems 1 and/or methods herein using data stored in a raw form using a computational model 20 that is trained and/or configured to process raw data, it has been found that normalizing the data contained within the normalized database 10 according to a defined database ontology allows the system 1 to operate with greater efficiency and higher accuracy, thereby resulting in fewer subsequent corrections and/or iterations with the critic 40.

Data normalization is the process of structuring data within a normalized database to minimize redundancy and improve consistency, accuracy, and efficiency. This involves organizing data into well-defined tables and/or other data structures and ensuring that relationships between data entries are maintained. As one example, multiple studies that each rely on a given set of data may each, in their respective reports, contain and/or list that given set of data. Normalization of these multiple studies may therefore involve the separation of this given set of data from the studies so that one copy is stored, while the relationship of this particular set of data to these multiple studies is preserved and also stored within the database. This reduces redundancy within the database and makes it easier to identify those studies that rely on that particular set of data. Normalization may also include steps that present data in consistent formats, using consistent languages or schemes, or the like to establish consistency and/or introduce some degree of homogeneity among data entries 12.

Data entries 12 within the normalized database 10 may, for example, be broken down into entities 14, activities 16, and agents 18. However, it is also contemplated that other organizational structures/ontologies may be used to configure the normalized database 10.

Entities 14 may serve as the core data elements stored within the normalized database 10 and may represent objects and/or concepts with attributes that exist independently of one another. Entities 14 may include, without limitation, raw or normalized data, software, specific tests and/or procedures, identifying information and/or metadata, and the like.

Activities 16 may refer to actions and/or processes that can interact with, modify, or otherwise change entities 14 over time, and may include, without limitation, processes such as data entry, publication of a study, updating of a dataset, review of a dataset, development of software, software review, and the like. Activities 16 in the context of a normalized database 10 may serve as a sort of audit trail by which changes to data entries 12 may be tracked over time.

Agents 18 may refer to authors, systems, individuals, organizations, and/or other similar actors that may influence and/or contribute to the data within the database. Agents 18 are typically responsible for creating, modifying, and/or curating data and/or entities 14 within the normalized database 10. Agents 18 may include, without limitation, software, automated processes and/or workflows, workstations, sensor suites, laboratory equipment, testing machinery, test stands, engineers, scientists, data curators, institutions, labs, reviewers, and the like. Typically, agents 18 may use and/or modify entities 14; and agents 18 may execute and/or participate in activities 16.

Depending on the parameters of the database ontology under which the normalized database 10 is configured, relationships 13 between entities 14, activities 16, and agents may be preserved, and these relationships 13 themselves may serve as data points and/or data entries 12 that may be used in the generation of an assurance case 60.

The computational model 20 may be software and/or computer code which is executed by one or more processors to carry out functions relating to the systems 1 and/or methods discussed herein. As noted above, the hardware which executes the computational model 20 may be the same as or separate from that of the normalized database 10.

The system 1 may further include an interface 22 through which a user submits a query 24 to the computational model 20. Interface 22 here may include physical interfaces, such as a keyboard and/or mouse or other similar hardware, touch screen, microphone/voice interface, gesture-based interface, and/or the like, without limitation. Interface 22 may also be a network interface or other communication interface such that commands may be issued by the user to the computational model from some remote and/or separate device, such as through a network or other communication medium.

The computational model 20 is configured to accept as input the query 24 from the user in order to carry out functions related to generating an assurance case 60. The computational model 20 may be any suitable model for carrying out this task, including algorithmic computational models, machine learning models, neural network models, symbolic models, and the like, without limitation. In some aspects, computational model 20 is a Large Language Model (LLM).

LLMs are advanced deep learning models trained on large amounts of text to understand and generate human-like language. LLMs are typically based on transformer architectures and use billions of parameters to learn statistical relationships between words, phrases, and concepts. LLMs are often pre-trained on large datasets to learn linguistic patterns, facts, and context from a diverse array of sources. Once pre-trained, LLMs can be fine-tuned on domain-specific data. Accordingly, while a general purpose LLM may be used as the computational model 20 for the systems and/or methods presented herein, the computational model 20 may be fine tuned to the contexts and idiosyncrasies of assurance cases so that output from the computational model 20 more closely resembles that which is expected, thereby reducing any error correcting steps and/or iterations with a critic 40.

The query 24 submitted by the user may be one discrete query and/or may be a plurality of queries. A query 24 may include a natural language request. The query 24 may, additionally or alternatively, include or be in the form of a "conversation," or an exchange and/or series of multiple queries between the user and the computational model 20 in a natural language format, such that at least a portion of the conversation may be used and/or processed by the LLM to carry out the task of generating an assurance case 60. This conversational interaction between the user and the computational model 20 may also permit the computational model 20 to search for deficiencies and/or errors within a given query 24 and, if any are found, the computational model 20 may question the user, request additional information, and/or otherwise obtain input from the user in an effort to resolve said deficiencies and/or errors. By performing this error checking in advance of generating the assurance case 60, the overall process may be made more efficient in a user-friendly way.

Additionally, the query 24 may incorporate or otherwise refer to any previous queries submitted. For example, a user reviewing a generated assurance case 60, may determine that a certain set of evidence X should not have been used. To remedy this, the user may submit a subsequent query 24 to the computational model that says, "Generate an assurance case without using evidence X." Though this current query may, on its own, be insufficient to facilitate generation of an assurance case, the computational model may then refer to a previous query for further context regarding the current query.

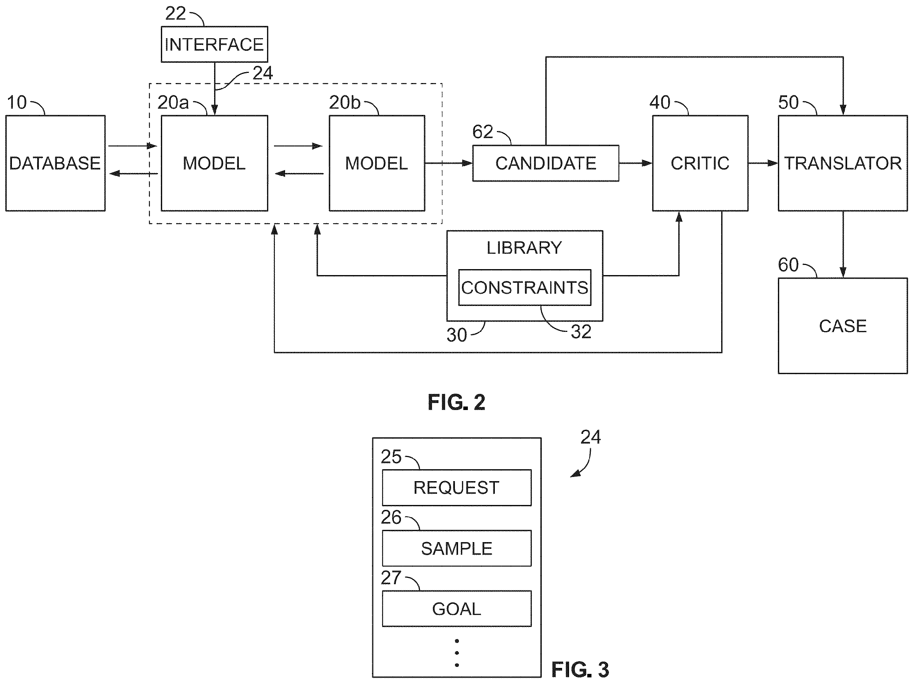

Turning briefly to FIG. 3, exemplary elements of a query 24 submitted by the user may include, but are not limited to: one or more requests 25 made of the computational model 20 (e.g., "Generate an assurance case using..."); one or more sample assurance cases 26 which are of the type, form, or any other discernible metric for the computational model 20 to follow in generating the assurance case 60; and/or one or more assurance case goals 27 or the like, formalized or informal, that the assurance case is to prove, or otherwise. In those aspects in which the computational model 20 is an LLM, or other suitable machine learning model, the submission of one or more sample assurance cases may trigger further fine-tuning of the computational model 20 to ensure compliance with the formats, regulations, rules, and the like contained therein. For example, the computational model 20 may be fine tuned according to a sample assurance case 26 provided through the query 24.

The query 24 may be submitted by the user in a natural-language format. That is, the user may make a casual or even conversational request of the computational model 20 to generate the assurance case 60 according to the requested criteria. In other words, the user need not formulate the query 24 according to a specific application programming interface (API), constructor format, function/method call, or the like. In this manner, the usability of the system is increased. Additionally or alternatively, the query 24 may also be submitted with or without conformance to any particular ontology and/or the database ontology of the normalized database 10, thereby eliminating any need by the user to be familiar with said ontologies. However, it may be appreciated that structured queries may still be processed and/or may have inherent benefits over natural-language requests.

Returning to FIG. 1, once the query 24 is received by the computational model 20, the computational model then formulates a request of the normalized database 10 for data entries 12 which correspond to the needs of the query 24.

For example, upon processing a sample assurance case 26 submitted by the user, the computational model may discern that a certain test procedure proves the sample assurance case 26, and therefore the request may include identifiers seeking data entries 12 and/or relationships 13 which correspond to the same or a similar test procedure for use in generating the assurance case 60. Additionally or alternatively, the computational model 20 may retrieve from the normalized database 10, as part of data entries 12, historical assurance cases. The computational model may then analyze these historical assurance cases for appropriate test procedures and/or evidentiary support in addition to or in place of processing a sample assurance case 26.

As another example, and/or in the absence of such a sample assurance case 26, the computational model 20 may more broadly submit a request to the normalized database 10 for data entries 12 and/or relationships 13 that are relevant to the query 24. The computational model 20 may then further process those data entries 12 and/or relationships 13 returned by the normalized database 10 in order to determine which of the data entries 12 and/or relationships 13 best correspond to the goals of the query for use in generating the assurance case 60.

The computational model 20 may request data in a single request, or the computational model 20 may iteratively build and/or generate new requests of the normalized database 10 as the assurance case 60 is built.

The computational model 20 may be one model or may be a plurality of models, as exemplified in FIG. 2. As shown therein, a first computational model 20a may be configured and/or specialized for generating requests to the normalized database, while a second computational model 20b may be configured and/or specialized for generating the assurance case 60 based on the information so retrieved.

In either configuration, the computational model 20 may be configured to process and subsequently populate information retrieved from the normalized database into the assurance case 60 and/or the computational model 20 may synthesize new, supplementary information based on the information retrieved from the normalized database. For example, the computational model 20 may synthesize an inference based on data retrieved from the normalized databases, such that this inference itself was not formally/specifically contained within the normalized database 10.

Once an assurance case 60 is assembled in apparent satisfaction of the user's query 24, the assurance case is processed as an assurance case candidate 62 by a critic 40 to verify completeness, correctness, and/or compliance with standards.

Depending on the type of computational model 20 used, there may be drawbacks inherent in the functioning of that computational model 20 that may be corrected before outputting a final assurance case 60. For example, "hallucination" is a known risk when using LLMs or other probabilistic models such that the computational model 20 may generate fake and/or potentially false information to populate into the assurance case 60. Accordingly, the critic 40 is provided to guard against these types of generative errors and ensure that the assurance case candidate 62 is of a quality which is acceptable to output as a final assurance case 60 to the user or stakeholder.

The critic 40 serves as a specialized component designed to evaluate, refine, and/or filter the outputs of the computational model 20, serving as a post-processing and/or feedback mechanism to enhance response accuracy, coherence, and alignment with desired criteria. The critic 40 may be configured to identify inconsistencies, factual errors, and/or logical flaws within the generated assurance case candidate 62, rooting out any biases, hallucinations, and/or other incongruences. The critic 40 may be implemented as: a rule-based critic, such that the critic 40 uses predefined rules and/or heuristics to check for errors; a neural critic model, such as another computational model that scores and/or refines the outputs of the computational model 20; and/or any combination of the two. The critic 40 may further request additional feedback and/or corrections from the user. The critic 40 may further be configured to submit requests to the normalized database 10 to verify that data that is used in the assurance case candidate 62 is consistent with those data entries 12 stored within the normalized database 10.

The critic 40 may be implemented using Formal Methods, such as by using automated reasoning, Boolean Satisfiability (SAT) solvers and/or Satisfiability Modulo Theories (SMT) solvers, and/or model checking. Automated reasoning includes algorithms that are configured to reason about logical statements with or without human intervention, and may be used to verify properties of the assurance case candidate 62 and/or prove correctness. SAT solvers determine whether a given logical formula is satisfiable, and SMT solvers may be used to extend SAT solvers by incorporating arithmetic theories, abstract theories, and the like. Model checking techniques verify systems by exploring possible states of a system or subsets thereof and ensuring that given specifications are satisfied.

The critic 40 may be one or more critics and is implemented by computer code executed by one or more processors. As above, the critic 40 may be executed by hardware which is the same as or different from that which executes the normalized database and/or the computational model, in any combination.

In some aspects, the critic 40 may utilize a constraint library 30 containing one or more constraints 32 when checking the assurance case candidate 62. Constraints are typically specific rules or conditions imposed on an assurance case that ensure that any arguments for compliance, security, and/or reliability contained therein meet defined standards and/or are logically sound. For example, constraint library 30 may contain certain constraints 32 that: ensure arguments do not contain contradictions or circular reasoning; meet relevant aspects of a certain paradigm (e.g., no missing failure modes); ensure alignment with industry-specific standards; ensure alignment with any regulatory-specific standards; define the types of evidence which might be used to prove a claim; define the sort of evidence which can be used to substantiate a claim; dictate specific relationships among evidence 14, activities 16, and/or agents 18 or logical chains thereof; dictate acceptable levels of uncertainty; and the like.

In some aspects, the constraint library 30 may be written in a machine-readable or critic-readable format, thereby ensuring that any nuances are appropriately captured and not lost to the same sorts of probabilistic and/or hallucinogenic drawbacks of those various computational models discussed above. Due to the importance of the role served by the critic 40, the constraints 32 are formulaic in nature to ensure an efficient dialogue between the critic 40 and computational model 20.

If the assurance case candidate 62 fails one or more constraints, the assurance case candidate 62 is sent back to the computational model 20 to be regenerated and/or corrected. The critic 40 may provide further context to the computational model 20 that indicates why the assurance case candidate 62 was rejected so that the computational model can make appropriate corrections and/or formulate corrected requests to the normalized database. It is further contemplated that any satisfaction criteria may be set here. For example, the critic 40 may reject the assurance case candidate 62 if a certain and/or predefined number of constraints are failed, or if certain specific constraints are failed, and/or any combination thereof.

In some examples, the user may stipulate as part of the query 24 that a certain percentage of constraints 32 must be satisfied by the assurance case candidate 62, that a certain number of constraints 32 must be satisfied by the assurance case candidate 62, and/or that certain and/or particular constraints 32 must be satisfied by the assurance case candidate 62. In some examples, the computational model 20 may derive and/or infer from the sample assurance case 62 and/or derive and/or infer based on other criteria of the query 24 a certain percentage of, number of, or certain and/or particular constraints 32 that must be satisfied by the assurance case candidate 62. In some examples, the computational model 20 may derive and/or infer from the data entries 12 and/or relationships 13 returned by the normalized database 10 a certain percentage of, number of, or certain and/or particular constraints 32 that must be satisfied by the assurance case candidate 62.

If the assurance case candidate 62 satisfies the applicable constraints 32 and/or a predefined number of constraints 32, further to the above, the assurance case candidate 62 is passed to a translator 50 to be converted to an assurance case 60 in a predetermined format consistent with the query 24 submitted by the user. In some examples, the predetermined format of the assurance case 60 may be a machine-readable format. In some examples, the predetermined format of the assurance case 60 may be a human-readable format. In another example, if the user specifically requests an assurance case 60 be generated in GSN format, or if the sample assurance case 26 is presented in GSN format, the translator 50 may convert the assurance case candidate 62 generated by the computational model 20 to an assurance case 60 in a GSN format.

A machine-readable format may be beneficial in instances in which the assurance case 60 is to be used as part of or in the furtherance of some established device, system, and/or process, as discussed in more detail below. Such a format would facilitate the easy input, reading, and/or processing of the logic of the assurance case 60 by another device, system, and/or process, thereby reducing the computational effort required for the same. This, in turn, means that such a device, system, and/or process may have its size, power consumption, and/or other operational needs reduced while still being able to incorporate the assurance case 60 into its operation.

A human-readable format may be beneficial in instances in which a stakeholder is a person, regulatory body, or the like. The assurance case 60 may be quickly generated and transmitted to the relevant stakeholders for viewing, thereby facilitating faster iteration and/or collaboration among stakeholders.

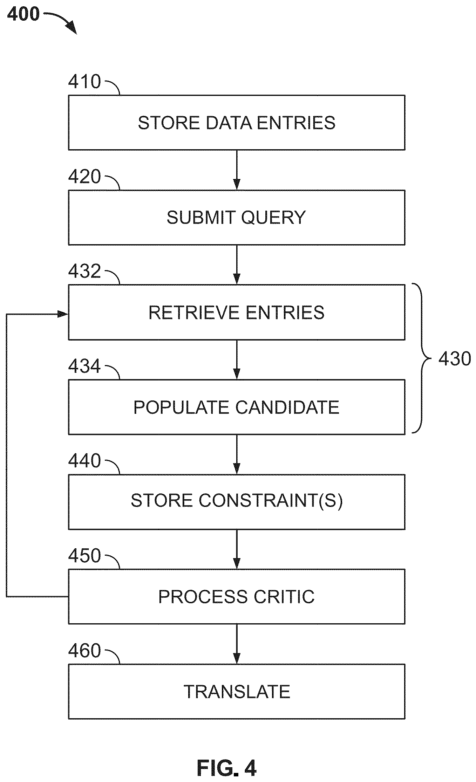

Turning now to FIG. 4 with continued reference to FIG. 1, an exemplary method 400 for generating self-consistent assurance cases is shown. It may be appreciated that the listing of steps here is an abstraction and that, where appropriate, certain steps may be combined with one another and/or viewed in combination. Additionally or alternatively, certain steps may be divided into sub-steps, re-ordered, and otherwise re-organized while achieving the same effect.

Further to the above descriptions, in step 410, data entries 12 are stored within a normalized database 10. The normalized database 10 may be pre-populated and/or actively updated, maintained, and/or otherwise modified before, during, and/or after execution of the method 400 herein.

In step 420, the user may submit via interface 22 and to the computational model 20 a query 24 containing instructions to generate an assurance case according to some requested criteria. Further to the above, query 24 may include any number and/or combination of requests 25, sample assurance cases 26, and/or assurance case goals 27 which may guide the computational model in generating the assurance case 60.

In step 430, the computational model 20 formulates requests to be made of the normalized database 10 based on the query 24 submitted by the user and populates the same into an assurance case candidate 62. By way of these requests, the computational model 20 retrieves from the normalized database 10 any number of data entries 12 and/or relationships 13 amongst the data entries 12 within the normalized database 10. Retrieval of entries from the normalized database 10 may alternatively be conceptualized as sub-step 432 of step 430.

Additionally, the computational model 20 may populate the data so retrieved from the normalized database 10 into the assurance case candidate 62. The computational model 20 may further synthesize any supplementary information to populate into the assurance case candidate 62, such that the supplementary information is not of a form or type that was stored in the normalized database. These population functions may alternatively be conceptualized as sub-step 434 of step 430.

In step 440, independent from and/or with any of those steps discussed above, one or more constraints 32 may be stored within a constraint library 30 for use by one or more critics 40, the computational model 20, and/or a translator 50.

In step 450, once the assurance case candidate 62 is generated, the critic 40 processes the assurance case candidate 62 against one or more of the constraints 32 contained within the constraint library 30 to determine whether the assurance case candidate 62 satisfies those constraints 32 and/or satisfies any other correctness, completeness, or compliance for the final assurance case 60. The critic 40 may further request and/or otherwise consult information from the normalized database 10 to ensure that those entries that have been populated to the assurance case candidate 62 are consistent with the data stored within the normalized database 10.

If a predetermined number of constraints 32 have been satisfied, further to those discussions above, the critic 40 then passes the assurance case candidate 62 to a translator 50 for generation of the final assurance case 60 in step 460.

However, if one or more constraints 32 have not been satisfied, or a certain number and/or sort of constraints 32 have not been satisfied, the critic 40 may reject the assurance case candidate 62 and return the same to step 430 and the computational model 20 to be resynthesized/regenerated. The critic 40 may, optionally, pass to the computational model 20 additional information as to such as the nature, type, and/or constraints 32 which were not satisfied, to assist the computational model 20 in generating a more correct assurance case candidate 62 for further review. The critic 40 may, optionally, prompt the user for more information in a similar manner.

Once generated, the assurance case 60 may be displayed to the user; stored in a computer-readable storage medium for later recall and/or display; and/or transmitted to one or more computing systems, display systems, mobile devices, or the like for viewing and/or review by one or more users, stakeholders, devices, and/or systems. Additionally or alternatively, a notification may be generated and/or otherwise transmitted to one or more users, stakeholders, devices, and/or systems in response to generation of the assurance case 60.

In some examples, the presence of the assurance case 60 may serve as a precondition for the operation of a device and/or system. As used herein, the assurance case 60 is "present" if the assurance case 60, some representation thereof (e.g., a hash, decomposition, or the like), and/or other data/metadata (e.g., dates, results, proofs, conclusions, constraint accuracy, and the like) relating to the assurance case 60 is accessible to a controller or the like of the device and/or system. The assurance case 60 or derivations thereof may directly and/or indirectly accessible by the device and/or system, such as by being stored within a computer-readable storage of the device and/or system itself, by being accessible through a networks (e.g., a licensing server), and/or the like.

In some examples, a computer system, engine, medical device, or the like - or some subcomponent/subsystem thereof - may serve as the subject of a given assurance case 60 and may be configured to be inoperable unless a valid assurance case 60 or information relating thereto is present. In other words, the presence of the assurance case 60 may serve as a key to unlock or otherwise enable the operability of a device and/or system at least partially described thereby.

In some examples, the assurance case 60 may describe a certain process, procedure, functionality, and/or the like to be carried out by a given device and/or system (or subcomponent and/or subsystem thereof), and the presence of the assurance case 60 or information relating thereto may serve as a precondition to the carrying out of said process, procedure, functionality, and/or the like. Additionally or alternatively, the assurance case 60 or information relating thereto may include operational parameters relating to said process, procedure, functionality, and/or the like. For example, the assurance case 60 may include parameters such as power settings, input and/or flow settings, timing settings, sensor thresholds, and the like which may then be used in the operation of the device and/or system and/or in the carrying out of said process, procedure, functionality, and/or the like.

In some examples, the assurance case 60 may include information relating to an operational life of the device and/or system, such as a maximum duration of operation, maximum number of cycles, and/or any other similar life- or maintenance-related metric. Accordingly, the device and/or system may be configured to operate only so long as any bounds of the operational life metric described by the assurance case 60 or information relating thereto are not exceeded.

The assurance case 60 may, additionally or alternatively, be automatically generated in response to a triggering event. A triggering event may include the addition of a new report, study, evidence, or the like to the normalized database 10; the establishment and/or revision of data entries 12 and/or relationships 13 within the normalized database 10; the release, publishing, or similar of new regulatory codes, guidelines, best practices, standards, or the like impacting the logic contents, and/or results of the assurance case 60; the release, publishing, or similar of revisions to existing regulatory codes, guidelines, best practices, standards, or the like impacting the logic, contents, and/or results of the assurance case 60; changes to devices and/or systems which may rely, at least in part, upon the assurance case 60 for operation; and/or any other event which might impact the contents, logic, results, and/or effect of the assurance case 60.

For example, it may be the case that a project lead may be unaware that a certain regulation has changed, yet the project lead may nevertheless automatically receive via email or the like an assurance case 60 which has been updated in conformance with the same. This would eliminate the need for the project lead to review changes to the regulation; determine what, if any, changes need to be made to existing assurance cases 60; coordinate updating of these assurance cases 60 among the relevant teams; and so on. It may also be appreciated that the transmission of the assurance case 60 to the project lead may include both the new assurance case 60 and a previous assurance case and may include highlights, redlines, summaries, or the like which explain what was changed between the two and/or why. Such summaries may also be generated by the computational model 20.

This continuing automatic generation of the assurance case 60 may stem from a single query 24. For example, the query 24 may include a request that the computational model 20 monitor for certain triggering events, update the assurance case 60 in response to the occurrence of these certain triggering events, and execute a certain procedure when the assurance case 60 is generated. This certain procedure may include the transmission of the assurance case 60 to the user, a relevant stakeholder, a device, system, and/or subpart thereof that relies upon the assurance case 60 for operation, and the like, further to the above.

Aspects of the disclosure include a non-transitory computer-readable storage medium containing instructions that, when executed by at least one processor, cause the processor to carry out any of steps 400-460 or other processes discussed above. This may include causing one or more computers to function as interfaces for receiving user queries, processing, and outputting of the same.

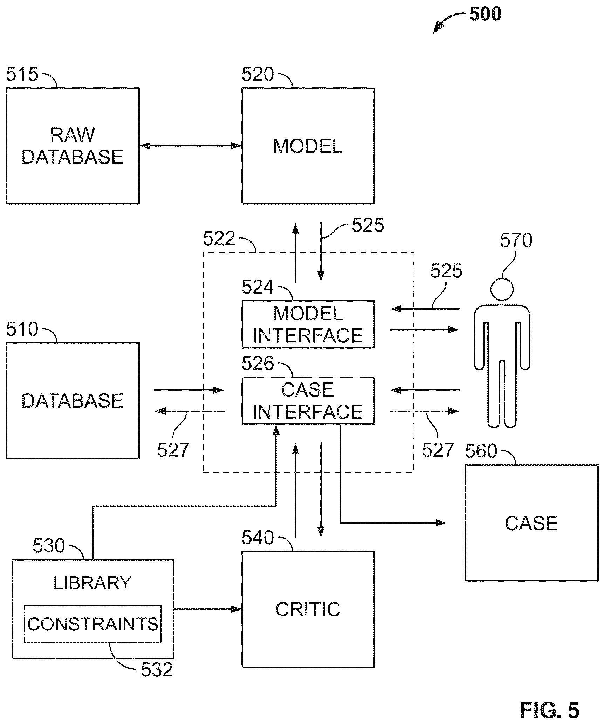

Turning now to FIGS. 5-6, another exemplary system 500 for generating self-consistent assurance cases consistent with the foregoing disclosures is shown. While those exemplary systems 1 of FIG. 1 address configurations in which the computational model 20 performs a larger portion of the work to generate an assurance case 60, those exemplary systems 500 of FIG. 5 address scenarios in which the user 570 utilizes more of a manually applied approach with generating the assurance case 560.

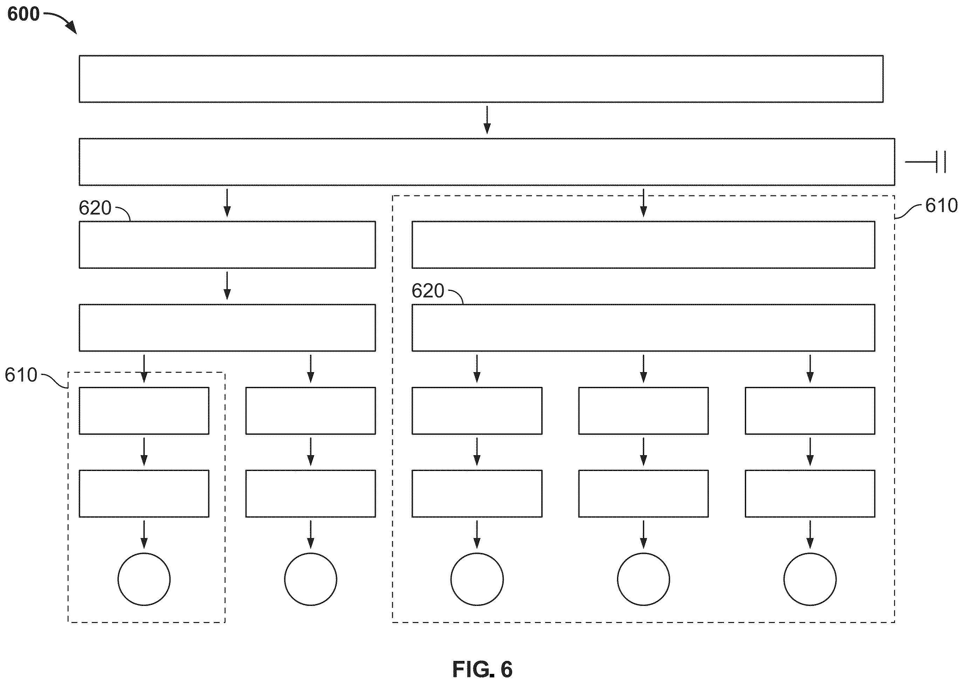

Accordingly, the user 570 may use the system 500 to help generate one or more portions of an assurance case 560, such as that shown in FIG. 6. In the exemplary GSN-format assurance case 600 shown in FIG. 6, the user 570 may wish to generate entire claim trees 610, or sub-sections, of the assurance case 600, or the user 570 may be seeking to populate specific properties 620 of the assurance case 600. In either scenario, the user 570 may not know what properties 620 and/or claim trees 610 to incorporate into the assurance case 600 and/or what evidence and/or data to populate into the specific properties 620 to meet the goals of the assurance case 600.

Properties 620 of the exemplary GSN-format assurance case 600 shown in FIG. 6 may include goals (e.g., claims to be proven or assured), strategies (e.g., reasoning, logical tests, criteria), solutions (e.g., evidence and/or data), and context (e.g., clarifications, assumptions) laid out in a flow chart, where one property 620 feeds into the next to form a claim tree 610, such that the logical reasoning defined by the structure is visually apparent. For example, a strategy may flow from a goal, and solutions and/or context may flow from the strategy, so that it may be readily visible what solutions and/or context are being used with what strategy to support a goal.

To assist the user 570, the system 500 of FIG. 5 may include a normalized database 510 consistent with that described above in FIG. 1, in which normalized data entries and corresponding relationships 13 may be stored in a normalized, curated manner. However, system 500 may further be provided with a raw database 515, such that raw database 515 contains as raw data entries at least some of the data stored within normalized database 510, albeit in a raw, unprocessed, non-normalized, and/or de-normalized form.

The system 500 may be provided with a user interface 522. User interface 522 may be conceptualized as two different interfaces, specifically a computational model interface 524 and an assurance case interface 526. The computational model interface 524 and assurance case interface 526 may be part of the same interface or may be split among multiple different interfaces.

The computational model interface 524 is provided to receive interrogations 525 from the user 570 relating to the user's current task, such as questions related to a property 620 or claim tree 610 the user 570 is seeking to generate and/or populate within the assurance case 560. The interrogation 525 is a natural language request submitted by the user 570 which requests from the computational model 520 instructions regarding the population of or how to populate an assurance case candidate. The computational model interface 524 then passes the user's interrogation 525 to a computational model 520 for processing. Interrogations 525 here may have similar form and content to that as queries 24 discussed above.

Computational model 520 may be provided with access to the raw database 515 such that the computational model 520 may discern from the information contained within the raw database 515 what evidence may be available within the normalized database 510 and/or may generate a prediction from the information contained within the raw database 515 as to what evidence may be available within the normalized database 510. The computational model may then provide these inferences back to the user 570 through the computational model 520 interface 524 as a recommendation. For example, the recommendation may include instructions for the user 570 to retrieve a certain data entry, a certain study or report, a certain test procedure, a certain relationship between entries, or the like from the normalized database 510. Additionally or alternatively, the recommendation may include further details as to where in the assurance case 560 this information should be populated. Here, as above, computational model 520 may be any suitable computational model. Some aspects include a computational model 520 formed as an LLM.

The assurance case interface 526 is provided to enable the user 570 to fill out the assurance case 560 as well as to enable the user 570 to submit one or more retrieval requests 527 to the normalized database 510 to retrieve information from the normalized database for filling out the assurance case 560.

The assurance case interface 526 facilitates entry of the one or more retrieval requests 527 by the user 570 to the normalized database 510 by providing a search interface, such as a search window, search entry field, text entry field, and/or other similar means of receiving input from the user 570. As noted above, interfaces may include audio/speech interfaces, and the like, without limitation.

The assurance case interface 526 further facilitates entry of information by the user 570, such as information obtained from the normalized database 510 in response to the one or more retrieval requests 527, into the assurance case 560.

Though retrieval requests 527 may also have similar form and content to that as queries 24 discussed above, retrieval requests 527 are more likely to contain more targeted requests due at least in part to the feedback provided to the user 570 by the computational model 520. Accordingly, once retrieved, the user 570 may populate information to the assurance case 560 directly and/or may draw inferences/conclusions from the information so retrieved to then populate to the assurance case 560.

The assurance case interface 526 may optionally be configured to restrict the user 570 to a predefined format when filling out the assurance case 560, thereby ensuring compliance by the user 570 and/or possibly reducing user error in data entry.

Additionally or alternatively, the assurance case interface 526 may be configured to provide suggestions to the user 570 as to interrogations 525 which the user 570 may submit to the computational model 520 or retrieval requests 527 the user 570 may submit to the normalized database 510. These suggestions may be derived from or built into the predefined format if one is so enforced.

The system 500 may further be provided with a critic 540 which, similar to critic 40 discussed above, may interface with a constraint library 530 containing one or more constraint 532. As the user 570 populates the assurance case 560, the critic 540 may automatically and/or in response to prompting by the user 570 check the assurance case 560 being generated at the case interface against one or more constraints. As above, the critic 540 may be implemented using Formal Methods.

If the critic 540 determines that the assurance case 560 satisfies a predetermined number of constraints, the user 570 may proceed with finalizing or otherwise completing the assurance case 560 and storing and/or transmitting of the same further to the above.

However, if the critic 540 determines that the assurance case 560 does not satisfy a predetermined number of constraints, in any combination further to those discussions above, the critic 540 may return the assurance case 560 to the user 570 for correction.

Additionally or alternatively, critic 540 may be incorporated into other steps further to the above descriptions. For example, the critic 540 may evaluate recommendations provided by the computational model 520 against one or more constraints before these recommendations are presented to the user 570. Additionally or alternatively, the critic 540 may evaluate the recommendations provided by the computational model 520 for accuracy before these recommendations are presented or displayed to the user 570. As another example, the critic 540 may generate and send a critic interrogation to the computational model 520 so that the user 570 is provided with additional context as to what constraints failed and what changes might be made to resolve the error.

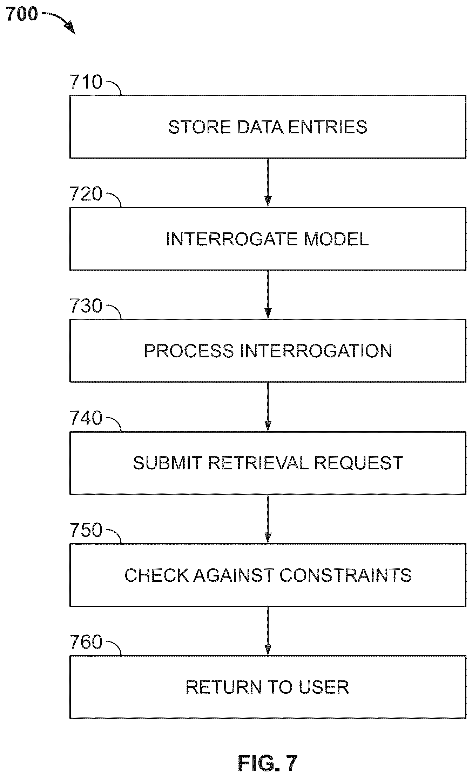

Turning now to FIG. 7 in conjunction with FIGS. 5-6, an exemplary method 700 carried out by those systems 500 shown in FIG. 5 is shown.

In step 710, data may be stored within the normalized database 510 and the raw database 515. As above, the normalized 510 and/or raw 515 databases may be pre-populated and/or actively updated, maintained, and/or otherwise modified before, during, and/or after execution of the method 700 herein.

In step 720, the user 570 may submit through the computational model interface 524 an interrogation 525 to the computational model 520 requesting assistance with completing at least a portion of the assurance case 560, such as a claim tree 610 or a property 620 of the assurance case 560.

In step 730, the computational model 520 may process the interrogation 525 with and/or in view of information stored within the raw database 515 to provide a recommendation to the user 570. Optionally, the critic 540 may review this recommendation for accuracy, such as by checking the recommendation against one or more constraints, before the recommendation is displayed to the user 570. If the recommendation is inaccurate, the critic 540 may then re-interrogate the computational model 520 on behalf of the user 570, may notify the user 570 for resolution by the user 570, or both.

In step 740, the user 570 may then submit one or more retrieval requests 527 to the normalized database 510 to retrieve information to populate and/or information to form inferences and/or conclusions to populate to the assurance case 560.

In step 750, the critic 540 may, automatically or upon prompting by the user 570, check the assurance case 560 against one or more constraints 532 stored within a constraint library 530 to determine whether the assurance case 560 satisfies those constraints 532 and/or satisfies any other correctness, completeness, or compliance conditions.

In step 760, the critic 540, upon determining that the assurance case 560 does not satisfy a predetermined number of constraints, may return the assurance case 560 to the user 570. Optionally, the critic 540 may further interrogate the computational model 520 and raw database 515 to provide additional feedback and/or context to the user 570 for resolution of the deficiency.

Aspects of the disclosure include a non-transitory computer-readable storage medium containing instructions that, when executed by at least one processor, cause the processor to carry out any of steps 700-760 or other processes discussed above. This may include causing one or more computers to function as interfaces for receiving user queries and processing of the same.

It may be appreciated that those systems and methods disclosed herein provide for a much improved system for generating assurance cases that increases both the ability of a user to generate assurance cases and the utility derivable therefrom. The systems and methods allow a user to consider even greater quantities of information than was previously practicable in the formulation of an assurance case and increase the usability of the systems by allowing the user to use natural-language, informal queries. The systems and methods also solve those problems relating to differing and/or shifting regulations and standards, allowing assurance cases to be more quickly generated and/or otherwise adapted to accommodate a specific stakeholder. The use of critic modules and constraints ensures that the assurance case that is generated is self-consistent and that the logic chains contained therein satisfy the overall goals. These gains in performance and capability further facilitate the use of assurance cases in earlier in the design processes instead of simply at its conclusion, thereby speeding innovation and development of new ideas and concepts.

Ranges can be expressed herein as from "about" one particular value, and/or to "about" another particular value. When such a range is expressed, another embodiment includes from the one particular value and/or to the other particular value. Similarly, when values are expressed as approximations, by use of the antecedent "about," it will be understood that the particular value forms another embodiment. It will be further understood that the endpoints of each of the ranges are significant both in relation to the other endpoint, and independently of the other endpoint.

Directional terms as used herein - for example up, down, right, left, front, back, top, bottom - are made only with reference to the figures as drawn and are not intended to imply absolute orientation.

The term "coupled" as used herein may refer to a direct engagement between components as well an indirect engagement through one or more intermediate components.

Unless otherwise expressly stated, it is in no way intended that any method set forth herein be construed as requiring that its steps be performed in a specific order, nor that with any apparatus specific orientations be required. Accordingly, where a method claim does not actually recite an order to be followed by its steps, or that any apparatus claim does not actually recite an order or orientation to individual components, or it is not otherwise specifically stated in the claims or description that the steps are to be limited to a specific order, or that a specific order or orientation to components of an apparatus is not recited, it is in no way intended that an order or orientation be inferred, in any respect. This holds for any possible non-express basis for interpretation, including: matters of logic with respect to arrangement of steps, operational flow, order of components, or orientation of components; plain meaning derived from grammatical organization or punctuation, and; the number or type of embodiments described in the specification.

As used herein, the singular forms "a," "an" and "the" include plural referents unless the context clearly dictates otherwise. Thus, for example, reference to "a" component includes aspects having two or more such components, unless the context clearly indicates otherwise.

As used herein, "processor(s)" may refer to any computational device capable of executing instructions, performing logical operations, and/or processing data and may include, but are not limited to, general-purpose central processing units (CPUs), field-programmable gate arrays (FPGAs), application-specific integrated circuits (ASICs), and other processing units such as graphics processing units (GPUs), neural processing units (NPUs), and/or digital signal processors (DSPs). The processor may be implemented as a single processing core, a multi-core architecture, and/or a distributed network of processing elements. The processors may be integrated within a system-on-chip (SoC) or as a discrete component interfaced with other system elements.

Further aspects of the embodiments described herein are provided by the subject matter of the following clauses:

A system for generating self-consistent assurance cases. The system includes one or more normalized databases which contain data entries, and the data entries include evidence, one or more activities, one or more agents, and one or more relationships between two or more of the evidence, activities, and agents. The system includes a computational model interface that is configured to receive input from a user and pass this input as a query to a computational model that is configured to process the query to generate an assurance case candidate. The system includes a constraint library containing one or more constraints stored in a format that is readable by a critic. The system includes a critic module that is configured to process the assurance case candidate generated by the computational model to determine whether the assurance case candidate satisfies one or more constraints. The system includes a translator module that is configured to convert the assurance case candidate to a human-readable format.

The system of any of the preceding clauses, wherein, in order to generate the assurance case candidate, the computational model is further configured to retrieve, from the normalized database(s), one or more data entries that correspond to the query.

The system of any of the preceding clauses, wherein the computational model is further configured to populate the assurance case candidate with the one or more data entries retrieved from the normalized database(s).

The system of any of the preceding clauses, wherein the computational model is further configured to process the one or more data entries retrieved from the normalized database(s) to generate supplementary information relating to the one or more data entries.

The system of any of the preceding clauses, wherein the computational model is further configured to populate the assurance case candidate with the supplementary information.

The system of any of the preceding clauses, wherein the computational model is further configured forward the one or more data entries retrieved from the normalized database(s) to a second computational model that is configured to populate the assurance case candidate with the one or more data entries.

The system of any of the preceding clauses, wherein the second computational model is further configured to populate the assurance case candidate with the supplementary information.

The system of any of the preceding clauses, wherein the normalized database is configured according to a database ontology.

The system of any of the preceding clauses, wherein the computational model is configured to process the at least one query consistent with the database ontology.

The system of any of the preceding clauses, wherein the query includes a natural language request by the user.

The system of any of the preceding clauses, wherein the query includes a sample assurance case provided by the user.

The system of any of the preceding clauses, wherein the query includes a goal and/or target conclusion for the assurance case to satisfy.

The system of any of the preceding clauses, wherein an ontology of the query differs from the database ontology.

The system of any of the preceding clauses, wherein the critic is configured to return the assurance case candidate to the computational model for further generation if the assurance case candidate fails to satisfy one or more constraint.

A system for generating self-consistent assurance cases. The system includes one or more normalized databases which contain data entries, and the data entries include evidence, one or more activities, one or more agents, and one or more relationships between two or more of the evidence, activities, and agents. The system includes one or more raw data databases containing raw data entries, such that one or more of the data entries of the normalized database(s) are based on one or more of the raw data entries. The system includes a computational model interface that is configured to receive input from a user and pass this input as an interrogation to a computational model that is configured to process the query to generate an assurance case candidate. The system includes an assurance case interface configured to allow or facilitate the user to enter one or more retrieval requests to the normalized database(s) to retrieve one or more of the data entries stored therein. The assurance case interface of the system is further configured to allow or facilitate the user to enter one or more of the retrieved data entries into an assurance case candidate. The system includes a constraint library containing one or more constraints stored in a format that is readable by a critic. The system includes a critic module that is configured to process the assurance case candidate generated by the computational model to determine whether the assurance case candidate satisfies one or more constraints.

The system of any of the preceding clauses, wherein the computational model is configured to process one or more interrogations to generate a responsive recommendation based on information contained within the raw data database.

The system of any of the preceding clauses, wherein the interrogation is a natural language request by the user for instructions explaining how to populate at least a portion of an assurance case candidate.

The system of any of the preceding clauses, wherein at least a portion of the assurance case candidate is a claim tree of the assurance case candidate.

The system of any of the preceding clauses, wherein the at least a portion of the assurance case candidate is a property of the assurance case candidate.

The system of any of the preceding clauses, wherein the at least one critic is further configured to submit a critic interrogation to the computational model if/when the assurance case candidate fails one or more constraints.

The system of any of the preceding clauses, wherein the assurance case interface is further configured to restrict the user to a predefined format for the assurance case candidate.

The system of any of the preceding clauses, wherein the assurance case interface is further configured to generate suggestions, based on the predefined format, for retrieval requests or interrogations for submission by the user to the normalized database or the computational model.

The system of any of the preceding clauses, wherein the at least one critic is further configured to evaluate the recommendation provided by the computational model for accuracy before the recommendation is presented to the user.

The system of any of the preceding clauses, wherein the at least one critic is further configured to evaluate the recommendation against one or more constraints.

The system of any of the preceding clauses, wherein the presence of the assurance case is used as a precondition for the operation of a device, system, and/or subpart thereof.

The system of any of the preceding clauses, wherein the presence of the assurance case serves as a key to enable the operation of a device, system, and/or subpart thereof.

The system of any of the preceding clauses, wherein information derived from the assurance case serves as a key to enable the operation of a device, system, and/or subpart thereof.

The system of any of the preceding clauses, wherein the information derived from the assurance case is a hash or decomposition of the assurance case.

The system of any of the preceding clauses, wherein the information derived from the assurance case is a hash or decomposition of a claim tree of the assurance case.

The system of any of the preceding clauses, wherein information contained within the assurance case is used to supply operating parameters for a process, procedure, functionality, and/or the like carried out by a device, system, and/or subpart thereof.

The system of any of the preceding clauses, wherein the assurance case is generated in response to a triggering event.

The system of any of the preceding clauses, wherein the triggering event is the addition of new information to the normalized database.

The system of any of the preceding clauses, wherein the triggering event is the updating of a regulation, guideline, best practice, standard, or the like relevant to the assurance case.

The system of any of the preceding clauses, wherein the triggering event is the addition of and/or a change to a device, system, and/or subpart thereof whose operation relies at least in part on the presence of the assurance case.

A method for generating self-consistent assurance cases. The method includes storing a plurality of data entries within one or more normalized databases. The method includes submitting a query through a computational model interface to a computational model. The method includes storing at least one constraint within a constraint library in a critic-readable format. The method includes generating an assurance case candidate based on the query. The method includes processing the assurance case candidate by a critic module to determine whether the assurance case candidate satisfies one or more of the at least one constraint. The method includes translating the assurance case candidate to a human-readable format.

The method of any of the preceding clauses, wherein the data entries include evidence, one or more activities, one or more agents, and one or more relationships between two or more of the evidence, activities, and agents.

The method of any of the preceding clauses, wherein generation of the assurance case candidate includes retrieving one or more data entries from the normalized database(s) that correspond to the query.

The method of any of the preceding clauses, wherein generation of the assurance case candidate further includes populating the assurance case candidate with one or more data entries.

The method of any of the preceding clauses, wherein generating the assurance case candidate further includes processing the one or more data entries with the computational model to generate supplementary information relating to the one or more data entries.

The method of any of the preceding clauses, wherein generating the assurance case further includes populating the assurance case candidate with the supplementary information.

The method of any of the preceding clauses, wherein generating the assurance case further includes forwarding one or more data entries that correspond to the query to a second computational model.

The method of any of the preceding clauses, wherein generation of the assurance case candidate further includes populating the assurance case candidate with one or more data entries using the second computational model.

The method of any of the preceding clauses, wherein generation of the assurance case candidate further includes processing one or more data entries with the second computational model to generate supplementary information relating to the one or more data entries.

The method of any of the preceding clauses, wherein generating the assurance case further includes populating the assurance case candidate with the supplementary information using the second computational model.

The method of any of the preceding clauses, wherein the normalized database is configured according to a database ontology.

The method of any of the preceding clauses, wherein the computational model is configured to process the at least one query consistent with the database ontology.

The method of any of the preceding clauses, wherein the query includes a natural language request by the user.

The method of any of the preceding clauses, wherein the query includes a sample assurance case provided by the user.

The method of any of the preceding clauses, wherein the query includes a goal and/or target conclusion for the assurance case to satisfy.

The method of any of the preceding clauses, wherein an ontology of the query differs from the database ontology.

The method of any of the preceding clauses, wherein the method further includes returning the assurance case candidate to the computational model for further generation if the assurance case candidate fails to satisfy one or more constraint.

A method for generating self-consistent assurance cases. The method includes storing a plurality of data entries within one or more normalized databases. The method includes storing a plurality of raw data entries within one or more raw data databases, such that one or more of the data entries of the normalized database(s) are based on one or more of the raw data entries. The method includes submitting one or more interrogations through a computational model interface to a computational model. The method includes processing the interrogation(s) to generate recommendations in response to the interrogation(s) based on information contained within the raw database. The method includes submitting through an assurance case interface one or more retrieval requests to the normalized database(s) for retrieving one or more data entries. The method includes entering the data entries into the assurance case candidate. The method includes processing the assurance case candidate with a critic to determine whether the assurance case candidate satisfies one or more constraints.

The method of any of the preceding clauses, wherein the method further includes returning the assurance case candidate to the user if/when the assurance case candidate fails one or more constraints.

The method of any of the preceding clauses, wherein the method further includes submitting a critic interrogation to the computational model if/when the assurance case candidate fails one or more of the at least one constraint.

The method of any of the preceding clauses, wherein the method further includes evaluating, by the at least one critic, the recommendation provided by the computational model for accuracy before presenting the recommendation to the user.

The method of any of the preceding clauses, wherein evaluation of the recommendation is performed against one or more constraints.

The method of any of the preceding clauses, wherein the assurance case interface is further configured to restrict the user to a predefined format for the assurance case candidate.

The method of any of the preceding clauses, wherein the assurance case interface is further configured to generate suggestions, based on the predefined format, for retrieval requests or interrogations for submission by the user to the normalized database or the computational model.

The method of any of the preceding clauses, wherein the interrogation includes a natural language request by a user for instructions explaining how to populate at least a portion of an assurance case candidate.

The method of any of the preceding clauses, wherein the data entries include evidence, one or more activities, one or more agents, and one or more relationships between two or more of the evidence, activities, and agents.

The method of any of the preceding clauses, wherein the presence of the assurance case is used as a precondition for the operation of a device, system, and/or subpart thereof.

The method of any of the preceding clauses, wherein the presence of the assurance case serves as a key to enable the operation of a device, system, and/or subpart thereof.

The method of any of the preceding clauses, wherein information derived from the assurance case serves as a key to enable the operation of a device, system, and/or subpart thereof.

The method of any of the preceding clauses, wherein the information derived from the assurance case is a hash or decomposition of the assurance case.

The method of any of the preceding clauses, wherein the information derived from the assurance case is a hash or decomposition of a claim tree of the assurance case.

The method of any of the preceding clauses, wherein information contained within the assurance case is used to supply operating parameters for a process, procedure, functionality, and/or the like carried out by a device, system, and/or subpart thereof.

The method of any of the preceding clauses, wherein the assurance case is generated in response to a triggering event.

The method of any of the preceding clauses, wherein the triggering event is the addition of new information to the normalized database.

The method of any of the preceding clauses, wherein the triggering event is the updating of a regulation, guideline, best practice, standard, or the like relevant to the assurance case.

The method of any of the preceding clauses, wherein the triggering event is the addition of and/or a change to a device, system, and/or subpart thereof whose operation relies at least in part on the presence of the assurance case.

A non-transitory computer-readable storage medium containing instructions that, when executed by at least one processor, causes the at least one processor to operate a computational model for generating self-consistent assurance cases. The storage medium includes instructions that cause the processor to receive a query submitted by a user through a computational model interface. The storage medium includes instructions that cause the processor to retrieve, from one or more normalized databases, data entries that correspond to the query. The storage medium includes instructions that cause the processor to populate an assurance case candidate with the one or more data entries retrieved from the normalized database(s). The storage medium includes instructions that cause the processor to forward the assurance case candidate to a critic that is configured to determine whether the assurance case candidate satisfies at least one constraint.

The storage medium of any of the preceding clauses, wherein the data entries include evidence, one or more activities, one or more agents, and one or more relationships between two or more of the evidence, activities, and agents.

The storage medium of any of the preceding clauses, wherein the computational model is further configured to process the one or more data entries retrieved from the normalized database(s) to generate supplementary information relating to the one or more data entries.

The storage medium of any of the preceding clauses, wherein the computational model is further configured to populate the assurance case candidate with the supplementary information.

The storage medium of any of the preceding clauses, wherein the computational model is further configured forward the one or more data entries retrieved from the normalized database(s) to a second computational model that is configured to populate the assurance case candidate with the one or more data entries.

The storage medium of any of the preceding clauses, wherein the second computational model is further configured to populate the assurance case candidate with the supplementary information.

The storage medium of any of the preceding clauses, wherein the normalized database is configured according to a database ontology.

The storage medium of any of the preceding clauses, wherein the computational model is configured to process the at least one query consistent with the database ontology.

The storage medium of any of the preceding clauses, wherein the query includes a natural language request by the user.

The storage medium of any of the preceding clauses, wherein the query includes a sample assurance case provided by the user.

The storage medium of any of the preceding clauses, wherein the query includes a goal and/or target conclusion for the assurance case to satisfy.

The storage medium of any of the preceding clauses, wherein an ontology of the query differs from the database ontology.

The storage medium of any of the preceding clauses, wherein the critic is configured to return the assurance case candidate to the computational model for further generation if the assurance case candidate fails to satisfy one or more constraint.

A non-transitory computer-readable storage medium containing instructions that, when executed by at least one processor, cause the at least one processor to operate a user interface for generating self-consistent assurance cases. The storage medium includes instructions that cause the processor to receive one or more interrogations from a user. The storage medium includes instructions that cause the processor to transmit the interrogation(s) to a computational model configured to process the interrogation(s) and generate a recommendation in response based on information contained within a raw data database. The storage medium includes instructions that cause the processor to display the recommendation to the user. The storage medium includes instructions that cause the processor to receive, from the user, a retrieval request for one or more of a plurality of normalized data entries from one or more normalized database(s). The storage medium includes instructions that cause the processor receive, from the user, instructions to enter data entries into an assurance case candidate. The storage medium includes instructions that cause the processor to transmit to a critic the assurance case candidate for evaluation as to whether the assurance case candidate satisfies one or more constraints.

The storage medium of any of the preceding clauses, wherein the data entries include evidence, one or more activities, one or more agents, and one or more relationships between two or more of the evidence, activities, and agents.

The storage medium of any of the preceding clauses, wherein one or more of the data entries of the normalized database(s) are based on one or more of the raw data entries.

The storage medium of any of the preceding clauses, wherein the interrogation includes a natural language request by the user for instructions explaining how to populate at least a portion of an assurance case candidate.

The storage medium of any of the preceding clauses, wherein the user interface is further configured to restrict the user to a predefined format for the assurance case candidate.

The storage medium of any of the preceding clauses, wherein the user interface is further configured to generate suggestions, based on the predefined format, for retrieval requests or interrogations for submission by the user to the normalized database or the computational model.

The storage medium of any of the preceding clauses, wherein the user interface is further configured to transmit, before display to the user, the recommendation to the critic for evaluation as to the accuracy of the recommendation.

The storage medium of any of the preceding clauses, wherein the at least one critic evaluates the recommendation against one or more constraints.

The storage medium of any of the preceding clauses, wherein the presence of the assurance case is used as a precondition for the operation of a device, system, and/or subpart thereof.

The storage medium of any of the preceding clauses, wherein the presence of the assurance case serves as a key to enable the operation of a device, system, and/or subpart thereof.

The storage medium of any of the preceding clauses, wherein information derived from the assurance case serves as a key to enable the operation of a device, system, and/or subpart thereof.

The storage medium of any of the preceding clauses, wherein the information derived from the assurance case is a hash or decomposition of the assurance case.

The storage medium of any of the preceding clauses, wherein the information derived from the assurance case is a hash or decomposition of a claim tree of the assurance case.

The storage medium of any of the preceding clauses, wherein information contained within the assurance case is used to supply operating parameters for a process, procedure, functionality, and/or the like carried out by a device, system, and/or subpart thereof.

The storage medium of any of the preceding clauses, wherein the assurance case is generated in response to a triggering event.

The storage medium of any of the preceding clauses, wherein the triggering event is the addition of new information to the normalized database.

The storage medium of any of the preceding clauses, wherein the triggering event is the updating of a regulation, guideline, best practice, standard, or the like relevant to the assurance case.

The storage medium of any of the preceding clauses, wherein the triggering event is the addition of and/or a change to a device, system, and/or subpart thereof whose operation relies at least in part on the presence of the assurance case.

A system for generating self-consistent assurance cases, the system comprising: a normalized database containing, as normalized data entries, evidence, an activity, an agent, and a relationship between two or more of: the evidence, the activity, and the agent; a raw data database containing raw data entries, wherein one or more of the normalized data entries of the normalized database are based on one or more of the raw data entries; a computational model interface configured to facilitate entry of at least one interrogation by a user to a computational model comprising a natural language request by the user for instructions explaining how to populate at least a portion of an assurance case candidate, wherein the computational model is configured to process the at least one interrogation to generate a recommendation responsive to the interrogation based on information contained within the raw data database; an assurance case interface configured to: facilitate entry of at least one retrieval request by the user to the normalized database for retrieval of one or more of the plurality of normalized data entries, and facilitate entry by the user of at least some of the one or more normalized data entries into the assurance case candidate; a constraint library containing at least one constraint that is stored in a critic-readable format; and at least one critic configured to process the assurance case candidate generated by the user to determine whether the assurance case candidate satisfies the at least one constraint.

The system according to any of the preceding clauses, wherein the portion of the assurance case candidate is a claim tree of the assurance case candidate.

The system according to any of the preceding clauses, wherein the a portion of the assurance case candidate is a property of the assurance case candidate.

The system according to any of the preceding clauses, wherein the at least one critic is further configured to return the assurance case candidate to the user when the at least one critic determines that the assurance case candidate has failed the at least one constraint.

The system according to any of the preceding clauses, wherein the at least one critic is further configured to submit a critic interrogation to the computational model when the at least one critic determines that the assurance case candidate has failed the at least one constraint.

The system according to any of the preceding clauses, wherein the assurance case interface is further configured to: restrict the user to a predefined format for the assurance case candidate, and generate suggestions, based on the predefined format, for retrieval requests or interrogations for submission by the user to the normalized database or the computational model.

The system according to any of the preceding clauses, wherein the at least one critic is further configured to evaluate the recommendation provided by the computational model for accuracy before the recommendation is presented to the user.

The system according to any of the preceding clauses, wherein the at least one critic is further configured to evaluate the recommendation against the at least one constraint.

A method for generating self-consistent assurance cases, the method comprising the steps of: storing a plurality of normalized data entries within a normalized database, wherein the plurality of normalized data entries comprises evidence, an activity, an agent, and at least one relationship between two or more of: the evidence, the activity, and the agent; storing a plurality of raw data entries within a raw database, wherein one or more of the normalized data entries of the normalized database are based on one or more of the raw data entries; submitting through a computational model interface at least one interrogation to a computational model, wherein the interrogation comprises a natural language request by a user for instructions explaining how to populate at least a portion of an assurance case candidate; processing the interrogation to generate a recommendation responsive to the interrogation based on information contained within the raw database; submitting, through an assurance case interface, at least one retrieval request by the user to the normalized database for retrieval of one or more of the plurality of normalized data entries; entering at least some of the one or more normalized data entries into the assurance case candidate; and processing the assurance case candidate with at least one critic to determine whether the assurance case candidate satisfies at least one constraint.

The method according to any of the preceding clauses, further comprising the step of: returning the assurance case candidate to the user when the at least one critic determines that the assurance case candidate has failed the at least one constraint.

The method according to any of the preceding clauses, further comprising the step of: submitting a critic interrogation to the computational model when the at least one critic determines that the assurance case candidate has failed the at least one constraint.

The method according to any of the preceding clauses, further comprising the step of: generating suggestions, based on a predefined format of the assurance case candidate to which the user is restricted, for retrieval requests or interrogations for submission by the user to the normalized database or the computational model.

The method according to any of the preceding clauses, further comprising the step of: evaluating, by the at least one critic, the recommendation provided by the computational model for accuracy before the recommendation is presented to the user.

The method according to any of the preceding clauses, wherein evaluation of the recommendation is performed against the at least one constraint.

A non-transitory computer-readable storage medium containing instructions that, when executed by at least one processor, cause the at least one processor to operate a user interface, wherein the user interface is configured to: receive, from a user, an interrogation comprising a natural language request by the user for instructions explaining how to populate at least a portion of an assurance case candidate; transmitting the interrogation to a computational model, wherein the computational model is configured to process the at least one interrogation to generate a recommendation responsive to the interrogation based on information contained within a raw data database; display the recommendation to the user; receive, from the user, a retrieval request for one or more of a plurality of normalized data entries from a normalized database; receive, from the user, instructions to enter at least some of the one or more normalized data entries so received into the assurance case candidate; and transmit, to at least one critic, the assurance case candidate for evaluation as to whether the assurance case candidate satisfies at least one constraint, wherein the normalized database contains as normalized data entries, evidence, an activity, an agent, and a relationship between two or more of: the evidence, the activity, and the agent, and wherein one or more of the normalized data entries of the normalized database are based on one or more of the raw data entries.

The non-transitory computer-readable storage medium according to any of the preceding clauses, wherein the user interface is further configured to: restrict the user to a predefined format for the assurance case candidate, and generate suggestions, based on the predefined format, for retrieval requests or interrogations for submission by the user to the normalized database or the computational model.

The non-transitory computer-readable storage medium according to any of the preceding clauses, wherein the user interface is further configured to: transmit, before display to the user, the recommendation to the at least one critic for evaluation as to an accuracy of the recommendation.

The non-transitory computer-readable storage medium according to any of the preceding clauses, wherein the at least one critic evaluates the recommendation against the at least one constraint.

While particular aspects have been illustrated and described herein, it should be understood that various other changes and modifications may be made without departing from the spirit and scope of the claimed subject matter. Moreover, although various aspects of the claimed subject matter have been described herein, such aspects need not be utilized in combination. It is therefore intended that the appended claims cover all such changes and modifications that are within the scope of the claimed subject matter.

## Claims

1. A system (500) for generating self-consistent assurance cases (560), the system comprising:
a normalized database (510) containing, as normalized data entries (12), evidence (14), an activity (16), an agent (18), and a relationship (13) between two or more of: the evidence (14), the activity (16), and the agent (18);
a raw data database (515) containing raw data entries, wherein one or more of the normalized data entries (12) of the normalized database (510) are based on one or more of the raw data entries;
a computational model interface (524) configured to facilitate entry of at least one interrogation (525) by a user (570) to a computational model (520) comprising a natural language request by the user (570) for instructions explaining how to populate at least a portion of an assurance case candidate (62), wherein the computational model (520) is configured to process the at least one interrogation (525) to generate a recommendation responsive to the interrogation (525) based on information contained within the raw data database (515);
an assurance case interface (526) configured to:
facilitate entry of at least one retrieval request (527) by the user (570) to the normalized database (510) for retrieval of one or more of the plurality of normalized data entries (12), and
facilitate entry by the user (570) of at least some of the one or more normalized data entries (12) into the assurance case candidate (62);
a constraint library (530) containing at least one constraint (532) that is stored in a critic-readable format; and
at least one critic (540) configured to process the assurance case candidate (62) generated by the user (570) to determine whether the assurance case candidate (62) satisfies one of more of the at least one constraint (532).

2. The system according to claim 1, wherein the portion of the assurance case candidate (62) includes a claim tree (610) of the assurance case candidate (62).

3. The system according to any of the preceding claims, wherein the at least a portion of the assurance case candidate (62) includes a property (620) of the assurance case candidate (62).

4. The system according to any of the preceding claims, wherein the at least one critic (540) is further configured to return to the user (570) the assurance case candidate (62) when the assurance case candidate (62) fails one or more of the at least one constraint (532).

5. The system according to any of the preceding claims, wherein the at least one critic (540) is further configured to submit a critic interrogation to the computational model (520) when the assurance case candidate (62) fails one or more of the at least one constraint (532).

6. The system according to any of the preceding claims, wherein the assurance case interface (526) is further configured to:
restrict the user (570) to a predefined format for the assurance case candidate (62), and
generate suggestions, based on the predefined format, for retrieval requests (527) or interrogations (525) for submission by the user (570) to the normalized database (510) or the computational model (520).

7. The system according to any of the preceding claims, wherein the at least one critic (540) is further configured to evaluate the recommendation provided by the computational model (520) for accuracy before the recommendation is presented to the user (570).

8. The system according to claim 7, wherein the at least one critic (540) is further configured to evaluate the recommendation against one or more of the at least one constraint (532).

9. A method (700) for generating self-consistent assurance cases (560), the method comprising the steps of:
storing a plurality of normalized data entries (12) within a normalized database (510), wherein the plurality of normalized data entries (12) comprises evidence (14), an activity (16), an agent (18), and at least one relationship (13) between two or more of: the evidence (14), the activity (16), and the agent (18);
storing a plurality of raw data entries within a raw database (515), wherein one or more of the normalized data entries (12) of the normalized database (510) are based on one or more of the raw data entries;
submitting through a computational model interface (524) at least one interrogation (525) to a computational model (520), wherein the interrogation (525) comprises a natural language request by a user for instructions explaining how to populate at least a portion of an assurance case candidate (62);
processing the interrogation (525) to generate a recommendation responsive to the interrogation (525) based on information contained within the raw database (515);
submitting, through an assurance case interface (526), at least one retrieval request (527) by the user (570) to the normalized database (510) for retrieval of one or more of the plurality of normalized data entries (12);
entering at least some of the one or more normalized data entries (12) into the assurance case candidate (62); and
processing the assurance case candidate (62) with at least one critic (540) to determine whether the assurance case candidate (62) satisfies one or more of at least one constraint (532).

10. The method according to claim 9, further comprising the step of:
returning to the user (570) the assurance case candidate (62) when the assurance case candidate fails (62) one or more of the at least one constraint (532).

11. The method according to any of claims 9-10, further comprising the step of:
submitting a critic interrogation to the computational model (520) when the assurance case candidate (62) fails one or more of the at least one constraint (532).

12. The method according to any of claims 9-11, further comprising the step of:
generating suggestions, based on a predefined format of the assurance case candidate (62) to which the user (570) is restricted, for retrieval requests (527) or interrogations (525) for submission by the user (570) to the normalized database (510) or the computational model (520).

13. The method according t to any of claims 9-12, further comprising the step of:
evaluating, by the at least one critic (540), the recommendation provided by the computational model (520) for accuracy before the recommendation is presented to the user (570).

14. The method according to claim 13, wherein evaluation of the recommendation is performed against one or more of the at least one constraint (532).
